# EUROPEAN PATENT SPECIFICATION

(11) **EP 3 631 276 B1**
(45) Date of publication and mention of the grant of the patent: **14.07.2021**
(21) Application number: 18727669.6
(22) Date of filing: 18.05.2018
(51) Int. Cl.: F16M 11/04, F16M 11/12, F16M 13/02

(54) **AN ADJUSTABLE MOUNT FOR AN IMAGE PROJECTOR**
VERSTELLBARE HALTERUNG FÜR EINEN BILDPROJEKTOR
SUPPORT RÉGLABLE POUR PROJECTEUR D'IMAGES

(30) Priority: 22.05.2017 DK PA201770363
(43) Date of publication of application: 08.04.2020
(73) Proprietor: DNP Denmark A/S, 2690 Karlslunde (DK)
(72) Inventor: LINDEGAARD, Søren Weis, 4600 Køge (DK); CHABOKIRAYENI, Behnam, 4100 Ringsted (DK); JENSEN, Johnny, 4653 Karise (DK); FRANDSEN, Jens Krabbe, 2860 Søborg (DK); SMEDEGAARD, Mike Fabricius, 8000 Århus C (DK); NIELSEN, Ebbe Folke, 8410 Rønde (DK)
(74) Representative: AWA Denmark A/S
(86) International application number: PCT/DK2018/050110
(87) International publication number: WO 2018/215036

(56) References cited:
- EP-A2- 0 939 548
- WO-A1-2013/160283
- CN-U- 204 374 590
- DE-U1-202008 014 128
- US-A1- 2010 321 646
- US-A1- 2012 168 391

## Description

The present invention relates to an adjustable mount for an image projector, a piece of furniture with such an adjustable mount and an image projection system with such a piece of furniture.

In recent years image projectors have gained in popularity both for private and commercial use. In particular, short throw projectors, i.e. projectors projecting the image onto the front projection screen in an acute angle are gaining in popularity, because the system of image projector and projection screen does not take up much space, and is less prone to be blocked by a person in front of the screen, as compared traditional projectors projecting onto the front projection screen at an angle much closer to perpendicular.

If the image projected onto the screen needs to have a good and aesthetically pleasing appearance - and it does, the projected image must hit the front projection screen very precisely. Distorted images, and images projected onto the surface next to the front projection screen are to be avoided. In this respect, various prior art mounts for projectors are known from e.g. CN204374590U, US2010/0321646A, US2012/168391A, and EP939548A. Moreover, for an aesthetical appearance and protection it is furthermore desirable if the image projector can be hidden away when not in use. In this respect, however, the acute projection angle poses some problems in precision, and reproducibility thereof, because it takes much less disturbance of the position of the image projector before the image is distorted and improperly projected onto the front projection screen.

WO2013160283A1 and DE202008014128U1 each discloses a piece of furniture according to the preamble of the appended claim 1.

On this background, the present invention sets out to provide a mount which allows the image projector to be precisely positioned with respect to the front projection screen, and in particular precisely positioned in a reproducible manner, even when the image projector is located in a movable manner in a piece of furniture, allowing it to be stowed away when not in use.

According to a first aspect of the invention this object is achieved by a piece of furniture comprising a drawer movable with respect to a body of said piece furniture between a closed position and an open position, characterized in that it comprises an adjustable mount for an image projector provided in said drawer, the adjustable mount comprising a base, a platform separated from the base by at least three columns with a generally circular cross-section, and a mounting element adapted for engagement with the image projector, where at least some of the columns are adjustable, so as to define a desired spacing between the base and the platform, where said at least three columns are at a first end connected to one of said platform or said base, and remote from said first end pass through apertures in the other of said platform or said base for adjustable engagement, wherein at least some of said apertures have a geometry with a diameter of an inscribed circle larger than the diameter of the column passing through it. Moreover, it thereby becomes possible to arrange the mount in an easy, well-defined, and preferably inconspicuous manner in close relationship to the front projection screen. The latter is in particular the case when according to a preferred embodiment of the second aspect of the invention, said adjustable mount is provided in a drawer movable with respect to a body of said piece furniture between a closed position and an open position.

By providing the three apertures for the three respective columns in these shapes and dimensions, i.e. dimensions larger than the nominal diameter of the columns, it becomes possible to accommodate for changes in the angles of the columns with respect to the base, when their effective lengths are changes, and therefore the base and the platform turn away from being in parallel with respect to each other. In particular, some of the three apertures may be provided with much less precision, e.g. as compared to purely circular apertures, in turn leading to cost reduction. So by allowing the columns to change their angles in this way, it becomes easy to adjust the angle of the platform with respect to the front projection screen in a well-defined manner, simply by adjusting the effective lengths of columns.

According to a preferred embodiment according to the first aspect of the invention the apertures comprise a first aperture with a diameter of the inscribed circle corresponding essentially, i.e. nominally, to the diameter of the column passing through it, a second aperture with a diameter of an inscribed circle larger than the diameter of the column passing through it, a third elongate aperture having a length and a width, where the length is longer than the diameter of the column passing through it and where the width corresponds essentially to the diameter of the column passing through it. This still allows some of the three apertures to be provided with much less precision, as compared to purely circular apertures, while securing and maintaining the adjusted angle of the platform with respect to the front projection screen in and even better defined manner. This may still simply be done by adjusting the effective lengths of columns, and it still leads to a significant cost reduction.

According, to an even more preferred embodiment at least one of the first or second aperture, and preferably both, has a circular shape so that the diameter of the inscribed circle corresponds to the diameter of said first and/or second aperture, or in other words when the geometry of the aperture is circular the inscribed circle is coincident with the periphery of the circular aperture. Circular shaped apertures are easy to provide with great precision in a cost-efficient manner, e.g. by drilling or punching.

According to a preferred embodiment according to the first aspect of the invention, the columns comprise a threaded surface and nuts with a matching thread, so as to adjust an effective length of said columns defining said desired spacing. This provides a simple, efficient and intuitive adjustment.

According to a further preferred embodiment according to the first aspect of the invention, biasing springs are provided between said base and said platform. By biasing the base and the platform apart, only one adjustment nut is needed per column to adjust the effective length thereof because the base or the platform, as the case may be, is then retained in one direction along the columns by the biasing spring, and in the other by the nut, which is itself displaceable along the column.

According to an especially preferred embodiment according to the first aspect of the invention, apertures are provided in the base. This allows the adjustment nuts to be easily accessible, even with the image projector in position on the mounting element.

According to yet a further preferred embodiment according to the first aspect of the invention, the mounting element extends in parallel to said platform and said mounting element is adapted to be at least displaceable in parallel with respect to said platform, and wherein at least one releasable securing member is provided. This allows the image projector to be moved forward, backward and sideways with respect to the projections screen, and then be fixed at a desired distance and angle, where the size of the projected image matches the size of the front projection screen, upon which the position, angle etc. may be accurately adjusted by adjustment of the effective length of the columns. In other words, providing a possibility of coarse adjustment before fine adjustment.

According to yet another preferred embodiment according to the first aspect of the invention, the base comprises a further access aperture is adapted to adapted to allow access to the at least one releasable securing member. This allows easy access to readjustment coarse adjustment of the image projector.

According to a further preferred embodiment according to the first aspect of the invention, the piece of furniture comprises mutually engaging elements adapted to secure the drawer in the open position. This allows the drawn-out drawer to be arrested in a reproducible, accurate and well-defined position, in turn ensuring the correct positioning of the image projector with respect to the front projection screen when in use.

According to an especially preferred embodiment of according to the first aspect of the invention, said mutually engaging elements comprise magnets. Magnetic attraction provides a good engagement between the elements which, though it may be overcome by the user pushing the drawer back in after use, suffices to maintain the drawer and hence the image projector in the desired well-defined position.

According to a preferred embodiment according to a second aspect of the invention, there is provided a system comprising a front projection screen and a piece of furniture. This allows the front projection screen to be generally matched to the position of the image projector in advance, e.g. in proper size, and allowing supply of a piece of furniture with an already - at least coarsely, adjusted image projector.

According to a further preferred embodiment according to the second aspect of the invention, the front projection screen and the piece of furniture are secured to one and the same wall. This makes the image projection system less prone to external disturbances. That is *inter alia* to say, with both mounted on the same wall or building structure, it becomes less likely that someone moves the furniture and hence the image projector out of position with respect to the front projection screen, e.g. inadvertently bumping into it or shoving is with a vacuum cleaner or the like. Furthermore, being mounted on the same structure they are more likely to move together, e.g. if the weight of a passing person on the floor causes the wall to move, thus minimizing the disturbance.

The invention will now be described in greater detail based on nonlimiting exemplary embodiments and with reference to the drawings, on which:
Fig. 1 shows an interior decoration with a system according to the third aspect of the invention,
Fig. 2 shows a piece of furniture according to the second aspect of the invention,
Fig. 3 shows a top plan view of a piece of furniture according to the second aspect of the invention with an open drawer in which an adjustable mount according to the first aspect of the invention is mounted,
Fig. 4 shows a cross-section of a piece of furniture according to the second aspect of the invention with an open drawer for accommodating an adjustable mount according the first aspect of the invention,
Fig. 5 shows a top plan view of the adjustable mount according to the first aspect of the invention,
Fig. 6 shows a perspective top view of the adjustable mount according to the first aspect of the invention,
Fig. 7 shows a side view of the adjustable mount according to the first aspect of the invention,
Fig. 8 shows a perspective bottom view of the adjustable mount according to the first aspect of the invention,
Fig. 9 shows an exploded view of the adjustable mount according to the first aspect of the invention, and
Fig. 10 shows a top plan view of the baseplate of the adjustable mount according to the invention illustrating the four different apertures.

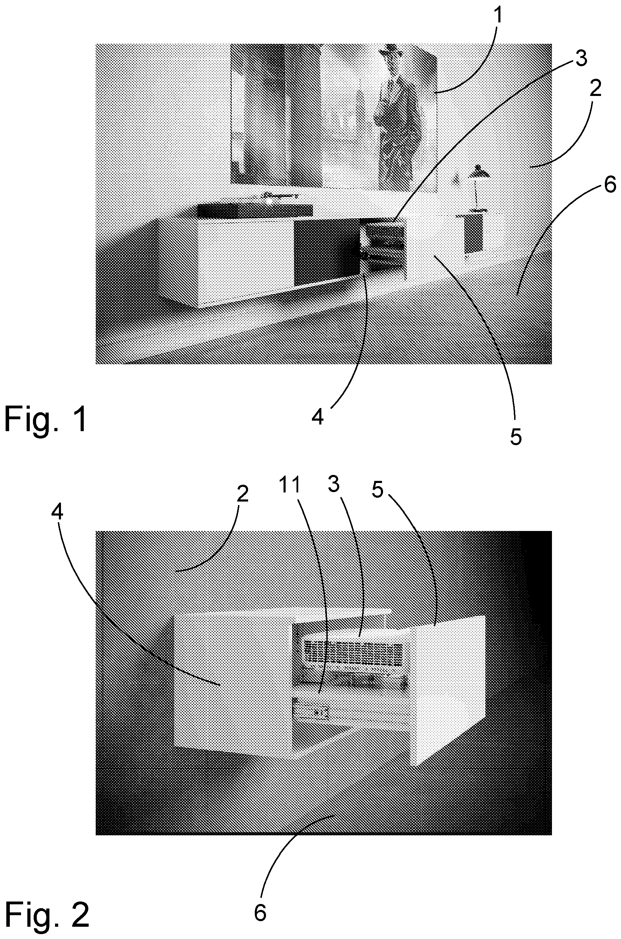

Turning first to Fig. 1 an image projection system according to the invention is shown. The image projection system comprises a front projection screen 1 mounted on a wall 2. An image projector is 3 is mounted in a piece of furniture 4. More specifically the image projector is mounted in a drawer 5 of the furniture, so that it is hidden and protected when not in use and the drawer is closed. Since, however, the present invention is related to the positioning of the image projector 3 with respect to the front projection screen 1, the drawer 5 is only shown in the open position. As can be seen the piece of furniture 4 is also mounted on the wall 2. Having both the front projection screen 1 and the piece of furniture 4 mounted on one and the same wall, means that they move together under external influences, say if the weight of a passing person on the floor 6 causes the wall to move, in turn minimizing the disturbance. As can be seen from Fig. 2 in comparison with Fig. 1 the piece of furniture may be a modular piece of furniture 4 forming part of a larger interior decoration. Though shown mounted on the wall 2 well above the floor 6 it is of course not excluded that the piece of furniture 4 could be resting on the floor 6. This in turn does not exclude that the piece of furniture 4 could still be affixed to the wall 2. It is currently preferred that the image projector 3 is located in a drawer 5 which can be drawn in a translatory motion from a closed position to the open position shown in Figs. 1 and 2 as well as Figs. 3 and 4. It is however not excluded that the image projector could be mounted on a shelf attached in a suitable manner to a bottom hinged door. It is of course also not excluded that the piece of furniture 4 with the image projector could be mounted upside down on the wall 2 above the projection screen 1, or on the ceiling above the projection screen 1 or even secured to both. This, however, could make the adjustment more difficult, as it would most likely involve work on a platform or a ladder as well as a somewhat awkward working position. For convenient daily use it would in that case also be advantageous to provide a preferably remote controlled motorized drive for opening and closing the drawer 5. Such arrangements are however not relevant for the present invention as such.

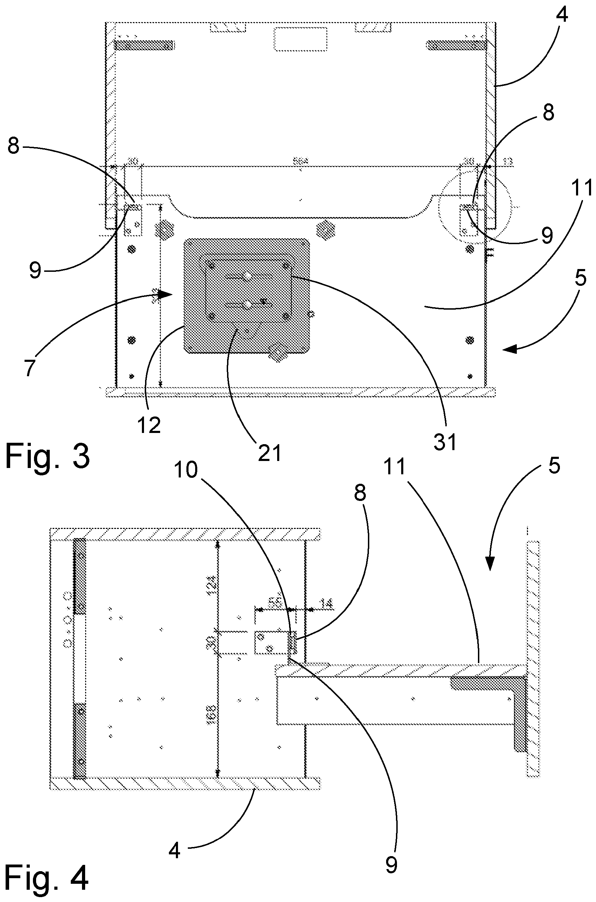

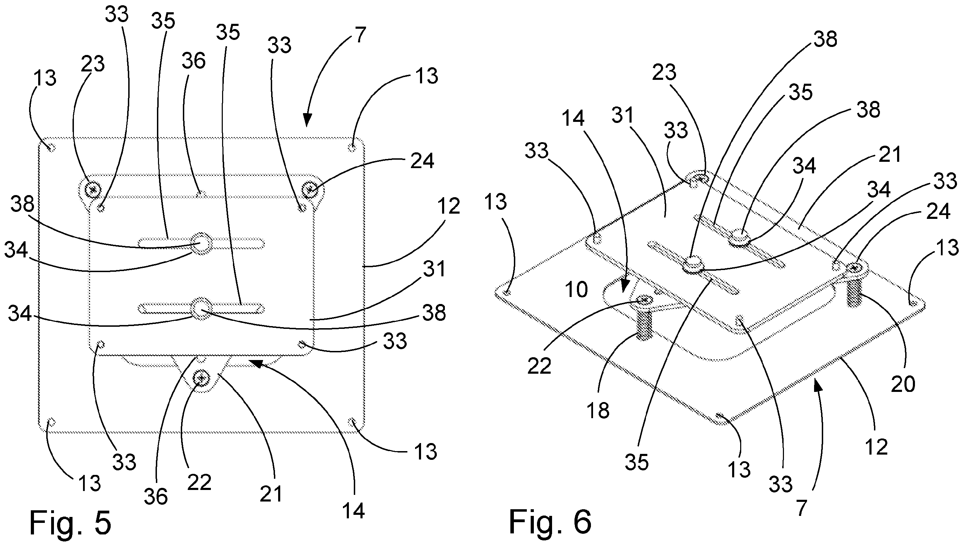

Turning now to Fig. 3 a top view of a cross section through the piece of furniture 4 with the drawer 5 in an open position is shown. In the drawer 5 an adjustable mount 7 for the image projector 3 is located. The adjustable mount 7 will be described later in conjunction with Figs. 5 to 10. As can be seen the adjustable mount 7 is off-set to the left with respect to the drawer 5. This ensures symmetry, when, as is the case of the currently preferred short throw projector, the image projector is itself asymmetrical. That is to say, a centre line of the piece of furniture 4 can be aligned with the centre line of the front projection screen 1 so that a symmetrical aesthetic appearance of the interior decoration, e.g. as shown in Fig. 1, is achieved. Evidently, if the image projector 3 was not asymmetrical the adjustable mount 7 would be located on the centre line of the piece of furniture 4 too.

As can be seen in Figs. 3 and 4 the drawer 5 and the body of the piece of furniture 4 are fitted with a pair of brackets 8, 9, or preferably two pairs of brackets 8, 9, each bracket 8, 9 of a pair located at a right angle to the other with one bracket 8 extending vertically sideways from the body of the piece of furniture 4, and one bracket 9 extending vertically upward from the bottom 11 of the drawer 5. The respective vertical planes of the two brackets extend in parallel and the brackets 8, 9 register so that an end stop of the drawer 5 in the open position is provided. To ensure that the open drawer 5 stays in a well-defined open position, the pair of brackets 8, 9 is provided with suitable arresting means. Preferably the arresting means comprises at least one permanent magnet 10, but preferably a pair of oppositely polarized magnets 10 is used, one on each bracket 8, 9. However, if, as would normally the case, the brackets 8, 9 are made of magnetic material comprising iron, one magnet 10 would suffice, the opposing bracket serving as the attracted counterpart. Between the at least one magnet 10 and the counterpart, be it a bracket 8, 9 or another magnet 10, a cushioning member such as a piece of felt could be arranged to provide a gap dampening the engagement and reducing the magnetic attraction for less abrupt engagement and disengagement of the brackets 8, 9. All mechanical shocks and other abrupt motions are undesired, as they could dislocate the image projector 3 from its finely adjusted desired position. Instead of magnets 10, other known mechanical arresters such as elastic latches could be used, but magnets are currently preferred, for simplicity and lack of abrupt movements.

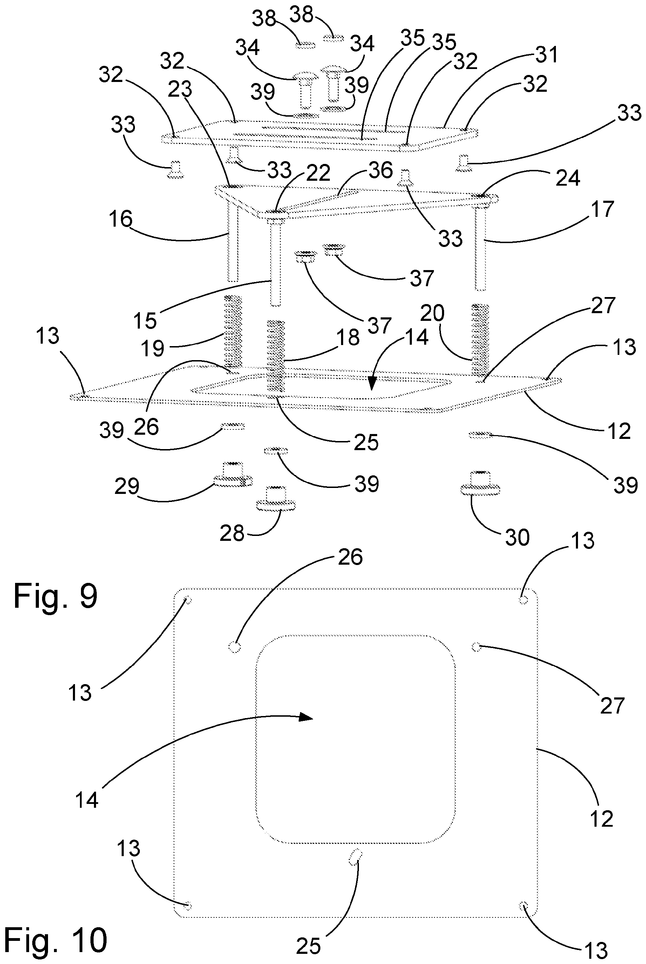

Turning now to Fig. 5 to 9 a preferred embodiment of the adjustable mount 7 according to the invention is shown. The adjustable mount 7 has a base provided by a generally rectangular baseplate 12 made of a suitable material such as steel. In each corner a hole 13 is provided for mounting screws, allowing it to be secured to the bottom 11 of the drawer 5. As can be seen from Fig. 2, the bottom of the drawer 5 may have a suitable recess matching the thickness and overall dimensions of the baseplate 12 allowing the upper side of the baseplate to lie flush with the bottom 11 of the drawer. Though not visible, this recess is preferably a shoulder of a ledge surrounding a cut-out in the bottom 11 of the drawer 5, the cut-out allowing access to the lower side of the baseplate 12 and preferably also through a large central aperture 13 of the baseplate 12 for adjusting the adjustable mount 7, e.g. by a hand or a tool. From the baseplate 12 three columns 15, 16, 17 extend. The column 15, 16, 17 themselves are best seen in the exploded view of Fig. 9, as in the other depictions they are surrounded by helical coil springs 18, 19, 20. At one end, each column 15, 16, 17 is rigidly connected to a generally triangular platform 21 rising over the baseplate 12. The triangular platform 21 is preferably made of a material with suitable rigidity such as steel. From the description to follow, the skilled person will realize that the triangular shape of the platform 21 is only preferred, and that other suitable shapes exist, e.g. a T-shaped platform 21 could be used instead. The three columns 15, 16, 17 preferably are rigidly connected to the triangular platform 21 at a respective corner thereof. The connection could be any suitable connection, but currently a connection by screws 22, 23, 24 into suitable bores (not visible) of the columns through holes at the respective corners of the platform 21 are preferred.

The columns 15, 16, 17 are preferably provided with an external thread. The columns 15, 16, 17, or at least a treaded part thereof, extend though three apertures 25, 26, 27. On the opposite side of the baseplate 12 with respect to the platform 21 the thread is engaged by a corresponding internal thread of a respective nut 28, 29, 30. The nuts 28, 29, 30 thus serve as stops for the baseplate 12 at each column 15, 16, 17 when the baseplate 12 is biased away from the platform 21 by the helical coil springs 18, 19, 20. By turning the nuts 28, 29, 30 the effective length of the columns, i.e. the distance between the baseplate 12 and the platform 21 at each column 15, 16, 17 thereby becomes adjustable. Evidently the force of the springs is adapted to the weight of the image projector to be mounted, so as to ensure the spaced apart position of the baseplate 12 and the platform 21. Also, the force of the springs is adapted to ensure that the columns 15, 16, 17 do not displace themselves laterally in those of the apertures 25, 26, 27 that have larger minimum dimensions than the respective column 15, 16, 17 passing through it. In order to not need any excessive spring force for this, friction elements 39 engaging the baseplate 12 (or the platform 21) are provided. As can best be seen in the the exploded view of Fig. 9, these friction elements 39 are preferably located between the nuts 28, 29, 30 so that they are sandwiched between a nut 28, 29, 30 and the baseplate 12. Since each of the nuts 28, 29, 30 is generally tightly fitted to the respective column 15, 16, 17, the friction between friction element 39 the baseplate 12 as well as the respective nut 28, 29, 30 will prevent the respective column 15, 16, 17 from moving laterally with respect to the baseplate 12. The friction elements 39 are preferably discs or washers of a suitable friction material such as rubber or a soft plastic material, but the skilled person will know of other suitable materials. Preferably, the friction elements have a central perforation adapted to the diameter of the columns 15, 16, 17 so as to surround it without any lateral play between the friction element 39 and the column 15, 16, 17 it surrounds. As to the helical coil springs 18, 19, 20 it should be mentioned that this is merely a preferred embodiment. Evidently, they do neither need to be coil springs nor do they need to be located at or surrounding the columns 15, 16, 17 or even match the columns 15, 16, 17 in their number.

As an alternative to the spring biasing, threaded nuts (not shown) could be arranged on the threaded columns 15, 16, 17 between the baseplate 12 and the platform 21. By turning these nuts, the effective length of the columns could be adjusted, and the baseplate 12 (or the platform 21 as the case may be) be biased against these nuts, by means of the nuts 28, 29, 30 to firmly secure the position of the platform 21 with respect to the baseplate 12.

The nuts 28, 29, 30 are preferably finger nuts with a knurled or grooved surface for increased friction, or wingnuts for easy manual operation as they serve to adjust the effective length of the columns 15, 16, 17, and hence the height of the platform 21 over the baseplate at the columns 15, 16, 17. Obviously, other kinds of nuts may be used, e.g. conventional hexagonal nuts. Since the effective length of each of the columns 15, 16, 17 may be individually adjusted, the angle of the platform 21 with respect to baseplate 12 may thereby be adjusted so that the image of the image projector 3 mounted on the adjustable 7 is accurately aligned with the front projection screen 3.

However, in order to coarsely adjust the alignment, as well as the size of the image, the adjustable mount 7 has a further adjustment feature in the form of a mounting element 31 adapted to lie in parallel engagement with the platform 21 and on top of it. The mounting element 31 preferably comprises a sufficiently rigid plate, such as a steel plate, adapted in size with the mounting means of the image projector 3. That evidently depends on the image projector 3, but in the preferred embodiment the mounting element is a generally rectangular plate with holes 32 in each corner through which mounting screws 33 may be inserted into corresponding threaded bores in the image projector and tightened for secure engagement with the image projector 3.

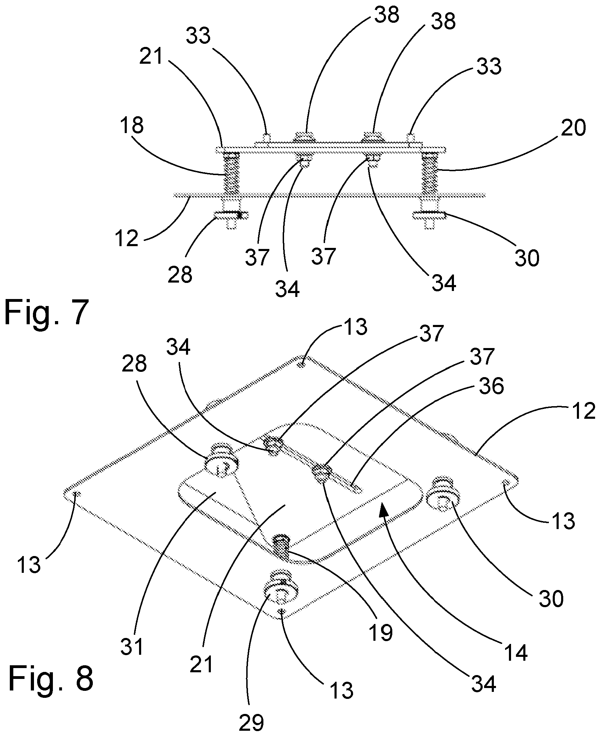

Having secured the image projector 3 to the mounting element 31, the mounting element 31 may, guided by a number of bolts 34, be displaced in one direction with respect to the platform 21 along one or more elongated slits 35 provided in the mounting element 31, and in a cross-wise direction thereto along at least one elongated slit 36 provided in the platform 21. The length of the at least one elongated slit 36 is preferably longer than the distance between the slits 35, so as also allow rotary motion of the mounting element 31 with respect to the platform 21. When the desired position and angle is reached, the mounting element 31 may be secured in that position and angle on the platform 21 by means of nuts 37 or the like. To easily access these nuts 37 a large central aperture 14 is provided in the baseplate 12, as will *inter alia* be apparent from Fig. 8. Preferably, small disks 38 of felt or the like are attached to the heads of the bolts 34. They inter alia keep the heads of the bolts 34 sandwiched between the mounting element 31 and the image projector 3, in turn, ensuring that the bolts 34 remain somewhat in place with perpendicular orientation with respect to the mounting element 31 when the latter is slid along the platform 21.

When the coarse positioning has been effected, the fine positioning may be performed by use to the adjustment nuts 28, 29, 30. However, when the effective lengths of the columns 15, 16, 17 are changed during the fine positioning, the change of the angle of the platform 21 with respect to the baseplate 12 will generally have a tendency to change the angle of the individual columns 15, 16, 17 in an uncontrolled manner. That is to say the columns 15, 16, 17 will be forced towards a position where they are not perpendicular to the baseplate 12 in an uncontrolled manner. One way of countering this would be to manufacture the apertures 25, 26, 27 in the baseplate to a high precision matching closely the diameter of the threaded columns 15, 16, 17. High precision and small tolerances are, however, costly in the manufacture, and according to the invention this is instead countered by the use of three apertures differing from each other.

Accordingly, as can be seen in Fig. 10, the first aperture 27 is a circular aperture with a diameter corresponding essentially to the nominal diameter of the first column 17, e.g. no more than 5.15 mm for a 5 mm diameter of the threaded column 17 or in relative terms less than 3% over dimension. The second aperture 26 is a circular aperture with a diameter larger than the diameter of the column 16 passing through it, e.g. up to 6.5 mm for a 5 mm diameter of the threaded column 16 or in relative terms up to 30% over dimension with respect to the nominal diameter of the threaded column 16. This allows some angular play of the first column 17 in the first aperture 27, i.e. allowing for a slight rotation. However, this angular play it largely hindered by the shape of the third aperture 25, which is an elongate aperture having a length and a width, where length is longer than the diameter of the third column 15 passing through it and where the width corresponds essentially to the diameter of the third column 15 passing through it, e.g. no more than 5.15 mm width for a 5 mm diameter of the threaded column 17 or in relative terms less than 3% over dimension. With this arrangement a good control and predictability of the way the columns 15, 16, 17 change their angle with respect to the baseplate 12 is achieved, without involving the high cost of fine tolerances in manufacture.

It should be noted though, that even if for reasons of manufacture circular apertures 26, 27 are preferred, they could in fact be substituted with any suitable geometry in particular regular polygonal shapes, such as triangular, square, pentagonal or even star-shaped. In that case it would obviously not be the diameter, which has to be adapted to the diameter of the column 16, 17, but instead the diameter of the inscribed circle. When, in that case, at least one of the first and second apertures is polygonal, the above dimensions would apply equally to the inscribed circles. It must, however, be emphasized that these values are merely examples, exemplifying the relevant precision.

Thus with the above, a new and inventive solution for mounting an image projector 3 in correct position with respect to a front projection screen 1. This solution provides several aspects of increased precision leading to advantages of not only the involved components but also of the overall system itself.

It should be noted though that what has been described is merely preferred embodiments of the components and system, for which the skilled person will easily see variants without departing from the scope of the invention. In particular, the skilled person will understand that deviations from the rectangular and triangular shapes if the baseplate 12, mounting element 31 and platform 21 are possible. Locations of holes, slits and apertures may also be altered. E.g. the columns 15, 16, 17 could be rigidly connected to the baseplate 12 and movable with respect to the platform 21.

Furthermore, the bottom 11 of the drawer 5 could be constituted by anything suitable for supporting the base, albeit it is currently preferred that the bottom 11 with base in the form of the baseplate 12 is a contiguous structure allowing objects to be placed and stored next to the image projector 3, such a remote control for the image projector 3, lens cleaning equipment etc. so as to be hidden away together with the image projector 3 when not in use. On the other hand, the bottom 11 of the drawer 5 could itself form the base rather than having a separate embedded baseplate 12.

It should also be noted that the platform 7 may of course also be used without the piece of furniture 4 and the drawer 5, in particular if it is placed in an inconspicuous manner, say below the ceiling of a room, with the projector below it, in which case it would largely be obscured by projector 3 and thus invisible.

## Claims

1. A piece of furniture (4) comprising
a drawer movable (5) with respect to a body of said piece furniture (4) between a closed position and an open position, **characterized in that** it comprises
an adjustable mount (7) for an image projector (3) provided and mounted in the said drawer (5),
the adjustable mount (7) comprising a base (12), a platform (21) separated from the base (12) by at least three columns (15, 16, 17) with a generally circular cross-section, and a mounting element (31) adapted for engagement with the image projector (3),
where at least some of the columns (15, 16, 17) are adjustable, so as to define a desired spacing between the base (12) and the platform (21),
where said at least three columns (15, 16, 17) are at a first end connected to one of said platform (21) or said base (12), and remote from said first end pass through apertures (25, 26, 27) in the other of said platform (21) or said base (12) for adjustable engagement,
wherein at least some of said apertures (25, 26, 27) have a geometry with a diameter of an inscribed circle larger than the diameter of the column (15, 16, 17) passing through it.

2. A piece of furniture (4) according to claim 1, wherein said apertures (25, 26, 27) comprise
a first aperture (27) with a diameter of the inscribed circle corresponding essentially to the diameter of the column (17) passing through it,
a second aperture (26) with a diameter of the inscribed circle larger than the diameter of the column (16) passing through it,
a third elongate aperture (25) having a length and a width, where length is longer than the diameter of the column (15) passing through it and where the width corresponds essentially to the diameter of the column (15) passing through it.

3. A piece of furniture (4) according to claim 2, wherein at least one of the first or second aperture (27, 26), and preferably both, has a circular shape so that the diameter of the inscribed circle corresponds to the diameter of said first and/or second aperture (27, 26), respectively.

4. A piece of furniture (4) according to any one of the preceding claims, wherein the columns (15, 16, 17) comprise a threaded surface and nuts (28, 29, 30) with a matching thread, so as to adjust an effective length of said columns (15, 16, 17) defining said desired spacing.

5. A piece of furniture (4) according to any one of preceding claims, wherein biasing springs (18, 19, 20) are provided between said base (12) and said platform (21).

6. A piece of furniture (4) according to any one of the preceding claims, further comprising friction elements (39).

7. A piece of furniture (4) according to any one of the preceding claims, wherein the apertures (25, 26, 27) are provided in the base.

8. A piece of furniture (4) according to any one of the preceding claims, wherein said mounting element (31) extends in parallel to said platform (21) and said mounting element (31) is adapted to be at least displaceable in parallel with respect to said platform (21), and wherein at least one releasable securing (37) member is provided.

9. A piece of furniture (4) according to claim 8, wherein the base comprises a further access aperture (14) is adapted to allow access to the at least one releasable securing member (37).

10. A piece of furniture (4) according to any one of the preceding claims, wherein the piece of furniture (4) comprises mutually engaging elements adapted to secure the drawer (5) in the open position.

11. A piece of furniture (4) according to claim 10, wherein said mutually engaging elements comprise magnets (10).

12. An image projection system comprising a front projection screen (1) and a piece of furniture (4) according to any one of the preceding claims.

13. An image projection system according to claim 12, wherein the front projection screen (1) and the piece of furniture (4) are secured to one and the same wall (2).

## Patentansprüche

1. Möbelstück (4), Folgendes umfassend:
eine Schublade (5), die in Bezug zu einem Körper des Möbelstücks (4) zwischen einer geschlossenen Stellung und einer geöffneten Stellung beweglich ist, **dadurch gekennzeichnet, dass** sie Folgendes umfasst:
eine einstellbare Halterung (7) für einen Bildprojektor (3), die in der Schublade (5) vorgesehen und montiert ist,
wobei die einstellbare Halterung (7) eine Basis (12), eine von der Basis (12) über mindestens drei Säulen (15, 16, 17) mit einem im Allgemeinen kreisförmigen Querschnitt getrennte Plattform (21) und ein Montageelement (31), das für den Eingriff in den Bildprojektor (3) eingerichtet ist,
wobei mindestens einige der Säulen (15, 16, 17) einstellbar sind, um einen gewünschten Abstand zwischen der Basis (12) und der Plattform (21) zu definieren,
wobei die mindestens drei Säulen (15, 16, 17) an einem ersten Ende mit der Plattform (21) oder der Basis (12) verbunden sind und vom ersten Ende entfernt für einen einstellbaren Eingriff durch Öffnungen (25, 26, 27) in dem anderen Element der Plattform (21) oder der Basis (12) verlaufen,
wobei mindestens einige der Öffnungen (25, 26, 27) eine Form mit einem Durchmesser eines Inkreises, der größer als der Durchmesser der dadurch verlaufenden Säule (15, 16, 17) ist, aufweisen.

2. Möbelstück (4) nach Anspruch 1, wobei die Öffnungen (25, 26, 27) Folgendes umfassen:
eine erste Öffnung (27) mit einem Durchmesser des Inkreises, der im Wesentlichen dem Durchmesser der dadurch verlaufenden Säule (17) entspricht,
eine zweite Öffnung (26) mit einem Durchmesser des Inkreises, der größer als der Durchmesser der dadurch verlaufenden Säule (16) ist,
eine dritte längliche Öffnung (25), die eine Länge und eine Breite aufweist, wobei die Länge länger als der Durchmesser der dadurch verlaufenden Säule (15) ist und wobei die Breite im Wesentlichen dem Durchmesser der dadurch verlaufenden Säule (15) entspricht.

3. Möbelstück (4) nach Anspruch 2, wobei die erste und/oder zweite Öffnung (27, 26), vorzugsweise beide, eine Kreisform aufweist/aufweisen, sodass der Durchmesser des Inkreises dem Durchmesser der ersten bzw.
zweiten Öffnung (27, 26) entspricht.

4. Möbelstück (4) nach einem der vorstehenden Ansprüche, wobei die Säulen (15, 16, 17) eine Gewindefläche und Muttern (28, 29, 30) mit einem passenden Gewinde umfassen, um die Wirklänge der Säulen (15, 16, 17) einzustellen, die den gewünschten Abstand definiert.

5. Möbelstück (4) nach einem der vorstehenden Ansprüche, wobei Vorspannungsfedern (18, 19, 20) zwischen der Basis (12) und der Plattform (21) vorgesehen sind.

6. Möbelstück (4) nach einem der vorstehenden Ansprüche, ferner Reibungselemente (39) umfassend.

7. Möbelstück (4) nach einem der vorstehenden Ansprüche, wobei die Öffnungen (25, 26, 27) in der Basis vorgesehen sind.

8. Möbelstück (4) nach einem der vorstehenden Ansprüche, wobei sich das Montageelement (31) parallel zur Plattform (21) erstreckt und das Montageelement (31) dazu eingerichtet ist, in Bezug zur Plattform (21) zumindest parallel verschiebbar zu sein, und wobei mindestens ein lösbares Befestigungselement (37) vorgesehen ist.

9. Möbelstück (4) nach Anspruch 8, wobei die Basis eine weitere Zugangsöffnung (14) umfasst, die dazu eingerichtet ist, Zugang zu dem mindestens einen lösbaren Befestigungselement (37) zuzulassen.

10. Möbelstück (4) nach einem der vorstehenden Ansprüche, wobei das Möbelstück (4) ineinander eingreifende Elemente umfasst, die dazu eingerichtet sind, die Schublade (5) in der geöffneten Stellung zu befestigen.

11. Möbelstück (4) nach Anspruch 10, wobei die ineinander eingreifenden Elemente Magnete (10) umfassen.

12. Bildprojektionssystem, einen Auflichtprojektionsschirm (1) und ein Möbelstück (4) nach einem der vorstehenden Ansprüche umfassend.

13. Bildprojektionssystem nach Anspruch 12, wobei der Auflichtprojektionsschirm (1) und das Möbelstück (4) an derselben Wand (2) befestigt sind.

## Revendications

1. Meuble (4) comprenant
un tiroir (5) mobile par rapport à un corps dudit meuble (4) entre une position fermée et une position ouverte, **caractérisé en ce qu'**il comprend
un support réglable (7) pour un projecteur d'images (3) situé et monté dans ledit tiroir (5),
le support réglable (7) comprenant une base (12), une plate-forme (21) séparée de la base (12) par au moins trois colonnes (15, 16, 17) avec une section transversale généralement circulaire, et un élément de montage (31) conçu pour venir en prise avec le projecteur d'images (3),
au moins certaines des colonnes (15, 16, 17) étant réglables, de sorte à définir un espacement souhaité entre la base (12) et la plate-forme (21),
lesdites au moins trois colonnes (15, 16, 17) étant au niveau d'une première extrémité reliées à l'une de ladite plate-forme (21) ou de ladite base (12), et à l'opposé de ladite première extrémité passant à travers des ouvertures (25, 26, 27) dans l'autre de ladite plate-forme (21) ou de ladite base (12) pour une mise en prise réglable,
au moins certaines desdites ouvertures (25, 26, 27) ayant une géométrie avec un diamètre d'un cercle inscrit plus grand que le diamètre de la colonne (15, 16, 17) qui les traverse.

2. Meuble (4) selon la revendication 1, ladite ouverture (25, 26, 27) comprenant
une première ouverture (27) avec un diamètre du cercle inscrit correspondant essentiellement au diamètre de la colonne (17) qui la traverse,
une deuxième ouverture (26) avec un diamètre du cercle inscrit plus grand que le diamètre de la colonne (16) qui la traverse,
une troisième ouverture allongée (25) ayant une longueur et une largeur, la longueur étant plus longue que le diamètre de la colonne (15) qui la traverse et la largeur correspondant essentiellement au diamètre de la colonne (15) qui la traverse.

3. Meuble (4) selon la revendication 2, au moins une de la première ou de la deuxième ouverture (27, 26), et de préférence les deux, ayant une forme circulaire de sorte que le diamètre du cercle inscrit corresponde au diamètre de ladite première et/ou deuxième ouverture (27, 26), respectivement.

4. Meuble (4) selon l'une quelconque des revendications précédentes, les colonnes (15, 16, 17) comprenant une surface filetée et des écrous (28, 29, 30) avec un filetage correspondant, de sorte à ajuster une longueur effective desdites colonnes (15, 16, 17) définissant ledit espacement souhaité.

5. Meuble (4) selon l'une quelconque des revendications précédentes, des ressorts de sollicitation (18, 19, 20) étant situés entre ladite base (12) et ladite plate-forme (21) .

6. Meuble (4) selon l'une quelconque des revendications précédentes, comprenant en outre des éléments de friction (39) .

7. Meuble (4) selon l'une quelconque des revendications précédentes, les ouvertures (25, 26, 27) étant situées dans la base.

8. Meuble (4) selon l'une quelconque des revendications précédentes, ledit élément de montage (31) s'étendant parallèlement à ladite plate-forme (21) et ledit élément de montage (31) étant conçu pour être au moins déplaçable parallèlement à ladite plate-forme (21), et au moins un élément de fixation libérable (37) étant fourni.

9. Meuble (4) selon la revendication 8, la base comprenant une autre ouverture d'accès (14) qui est conçue pour permettre l'accès à l'au moins un élément de fixation libérable (37).

10. Meuble (4) selon l'une quelconque des revendications précédentes, le meuble (4) comprenant des éléments de mise en prise mutuelle conçus pour fixer le tiroir (5) dans la position ouverte.

11. Meuble (4) selon la revendication 10, lesdits éléments de mise en prise mutuelle comprenant des aimants (10) .

12. Système de projection d'images comprenant un écran de projection avant (1) et un meuble (4) selon l'une quelconque des revendications précédentes.

13. Système de projection d'images selon la revendication 12, l'écran de projection avant (1) et le meuble (4) étant fixés à une seule et même paroi (2).
